# EUROPEAN PATENT SPECIFICATION

(11) **EP 1 022 955 B1**
(45) Date of publication and mention of the grant of the patent: **18.12.2002**
(21) Application number: 98949262.4
(22) Date of filing: 15.10.1998
(51) Int. Cl.: A23B 4/044, A23L 3/3409

(54) **METHODS FOR SMOKING OF SMALL PARTICLES OR DROPS IN A DISPERSION, AN EMULSION OR A SLURRY**
VERFAHREN ZUM RAEUCHERN KLEINER TEILCHEN ODER TROPFEN IN EINER DISPERSION, EMULSION ODER AUFSCHLAEMMUNG
PROCEDE PERMETTANT DE FUMER DES PETITES PARTICULES OU DES GOUTTELETTES DANS UNE DISPERSION, UNE EMULSION OU UNE SUSPENSION

(30) Priority: 17.10.1997 NO 974799
(43) Date of publication of application: 02.08.2000
(73) Proprietor: AS Forma, 0558 Oslo (NO)
(72) Inventor: EIDE, Ola, N-0667 Oslo (NO); STORR , Ivar, N-7033 Trondheim (NO); OFSTAD, Ragni, N-1266 Oslo (NO); FONSTAD, Mona, H rstadhaugen, N-0591 Oslo (NO)
(74) Representative: Flaccus, Rolf-Dieter, Dr.
(86) International application number: NO9800313
(87) International publication number: WO99020117

(56) References cited:
- WO-A1-94/28746
- JP-A- 1 039 970
- US-A- 4 181 739
- WPI/DERWENT, AN 88-290563, ARON WORLD K.K. et al., "Prepn. of Smoked Alaska Pollack Roe - by Washing Raw Roe with Water, Immersing in Colouring and Salting Soln., Immersing in Seasoning Soln. and Cold Smoking"; & JP 63214168 A (06-09-88).

## Description

The present invention relates to a method for smoking small particles or drops in dispersion, emulsion or suspension in a liquid support.

The invention's method, as will be apparent from the following, may be used for smoking of small, solid or semi-solid particles in dispersion, emulsion or suspension in a liquid support such as oil or water, or for smoking small drops of a material, dispersed or emulsified in another liquid support, thus systems of the type referred to as oil-in-water emulsions or water-in-oil emulsions.

Although the method of the invention can in principle be used with all of these systems, the invention will be described in the following particularly in connection with the smoking of roe in the form of roe granules, in a suspension in water.

The invention's method is especially applicable when integrated in a method for the production of caviar.

Smoking of food products is an old and well known technology. The smoking of foods was originally developed primarily as a preliminary treatment for the drying of foods. This preprocessing was developed especially for larger pieces of foods which required a long time to dry, for example, relatively large pieces of meat or fish.

The purpose of the smoking was primarily to prevent the incidence of microbial decay until the drying process could provide for the necessary preservation of the food products.

If the smoking process of this original concept were to cause an incipient dehydration of the food, this would merely be considered an advantage inasmuch as the food was supposed to be dried later on anyway.

For certain foods, however, this initial drying effect is undesirable, and conventional smoking is therefore a disadvantage since it can easily result in the formation of an unwanted dry crust.

Today the smoking of foods is done by placing the foods in a chamber or room and exposing them to the effects of smoke. Large pieces of foods such as sausages, salted cured sausages, hams and fish may be hung, whereas small food products such as roe sacks and fish fillets are laid on grates that are placed in carts.

Still smaller foods are distributed in suitably thick layers on trays that are then placed in carts.

The carts with the trays of foods to be smoked are then rolled into and out of the smoking room.

Generally the smoke is obtained with the aid of a smoke generator, where wood chips are subjected to a controlled burning, or by atomizing a liquid smoke aromatic (a water extract of smoke) into the smoking room.

Other techniques for providing a smoke aromatic for foods are spraying, brushing or injecting a water extract of smoke directly onto or into the food.

Spraying or brushing of liquid smoke aromatic will not cause the aforementioned formation of an unwanted dried crust or a shrunken or desiccated surface but, on the other hand, liquid smoke will not provide the same flavor experience as genuine smoke and therefore is unsuitable for a great many food products.

As mentioned above, the invention will be described in more detail with reference to smoking of roe intended for caviar.

Previously the smoking of roe was done by smoking the whole roe sack on grates.

Thus, after slaughtering only the whole roe sacks were processed further in a sequence of steps prior to the smoking, and the opening of the roe sack was not done until after the smoking.

This resulted in long production times -- this being a matter of days -- and as only whole roe sacks could be handled, the slaughtering of the fish resulted in rather substantial amounts of damaged roe that would be unsuitable for further processing.

The present invention aims to alleviate the deficiences with regard both to the disproportionately long time necessary for the smoking of roe, and the inordinately large amount of damaged roe that would be unsuitable for further utilization.

Therefore the present invention in its broadest aspect relates to a method for smoking small particles or drops in dispersion, emulsion or suspension in a liquid support, and this method is characterized in that smoke from a suitable smoke generator, containing the desired quantities of hydrophilic and hydrophobic components, is passed through a stirred dispersion, emulsion or suspension of the particles, and that the used smoke, after passing through the dispersion, emulsion or suspension, is optionally recirculated for mixing with fresh smoke from the generator.

In a narrower aspect, the present invention relates to a method as disclosed above for smoking roe granules in suspension in water, where the method is characterized in that smoke from a suitable smoke generator, containing the desired quantities of hydrophilic and hydrophobic components is passed through the suspension of roe granules and that the used smoke, after passing through the slurry, is optionally recirculated for mixing with fresh smoke from the generator.

This method of smoking roe granules represents a completely new way of thinking.

The background is suggested above, but in general it involves the following:

Conventional smoking leads to drying out of the foods and to irreversible reactions.

This is particularly problematical with the smoking of foods in the form of small, particulate elements, such as would be the case, for example, in the smoking of roe in the form of roe granules.

To accelerate the smoking process relative to the known art of smoking roe sacks, which as indicated above takes place in a time frame of the order of hours, it is proposed according to the invention that the smoking process be carried out in a suspension of water in the form of a "wet-smoking" process.

The food involved, in this case roe granules, is distributed in the water phase, and the smoke is introduced in finely dispersed form in the water phase.

It is an advantage, of course, that the water phase or a portion thereof be included as a part of the recipe for the finished product.

With regard to the smoke from conventional smoke generators, this consists of a long list of chemical compounds.

These chemical compounds may in principle be divided into two groups, viz.:
(A) The so-called hydrophilic compounds that are readily soluble in water, and
(B) The so-called hydrophobic compounds that are insoluble or only slightly soluble in water.

In liquid smoke aromatic which, as described above, is a water extract of smoke, we find essentially the readily soluble (hydrophilic) compounds from the smoke. The hydrophobic compounds will be either insoluble or only slightly soluble in water. Therefore, liquid smoke will not contain these compounds, nor will it impart them to the product that is desired to be smoked.

Since the natural smoke flavor is dependent on the presence of both the hydrophilic and the hydrophobic compounds, however, foods that are flavored with liquid smoke will not have the same flavor profile as products that are exposed to conventional smoke.

This is a problem that is solved by the technology of the present invention.

In the proposed "wet-smoking," the smoke containing all -- i.e., both hydrophilic and hydrophobic -- components is introduced into the water support with the suspended roe granules. The water-soluble compounds are dissolved in the water and are diffused therefrom into the food.

The hydrophobic compounds, those which are essentially absent in conventional, liquid smoke, will in the present process be found in a gas phase which bubbles through the water. The hydrophobic compounds therefore will either come into direct contact with the food when the bubbles attach themselves thereto, or they will be transported dynamically through the water phase from the gas bubble to the food in the same manner as, for example, oxygen transport through aerobic fermentation.

To control this process, and especially to control the concentration of hydrophilic compounds in the water phase, there may be applied variations of temperature, salt content, pH value and the like.

In addition, the concentration may be regulated by shifting out the water phase, either continuously or in batches.

In the same manner, the transport of hydrophobic compounds from the gas phase to the food is influenced by the water's temperature, salt content, pH value and the like. In addition, the transport to and into foods is regulated by the partial pressure of the smoke gas.

The method according to the invention can be carried out continuously, semi-continuously or in batches.

This shall be illustrated in more detail in the attached figures, wherein:
- Figure 1 shows a sketch of an apparatus designed for operation in batches, and wherein
- Figure 2 schematically illustrates the possibilities for continuous operation.

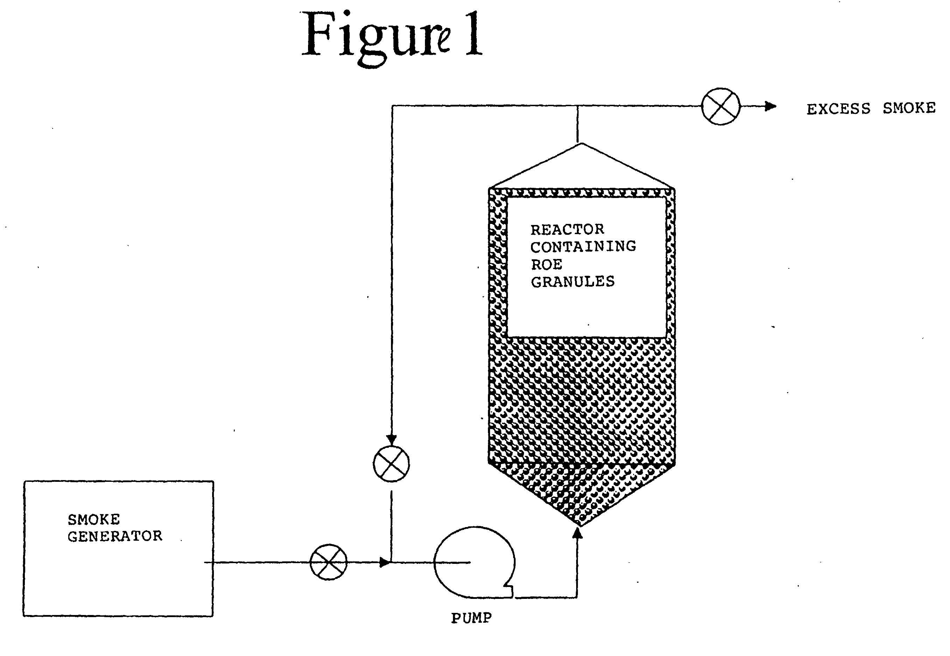

In Figure 1 smoke from a smoke generator, together with any potential recycled smoke, is pumped with the aid of a pump into a reactor where roe granules are suspended in a liquid support, preferably water.

After smoking for a suitable period of time, using a smoke containing the desired components, as are outlined in the description hereinabove, and after removing from the top any excess smoke, recirculated smoke or non-recirculated smoke, the smoking process is stopped and the mass of roe granules in the support fluid is removed in a conventional manner.

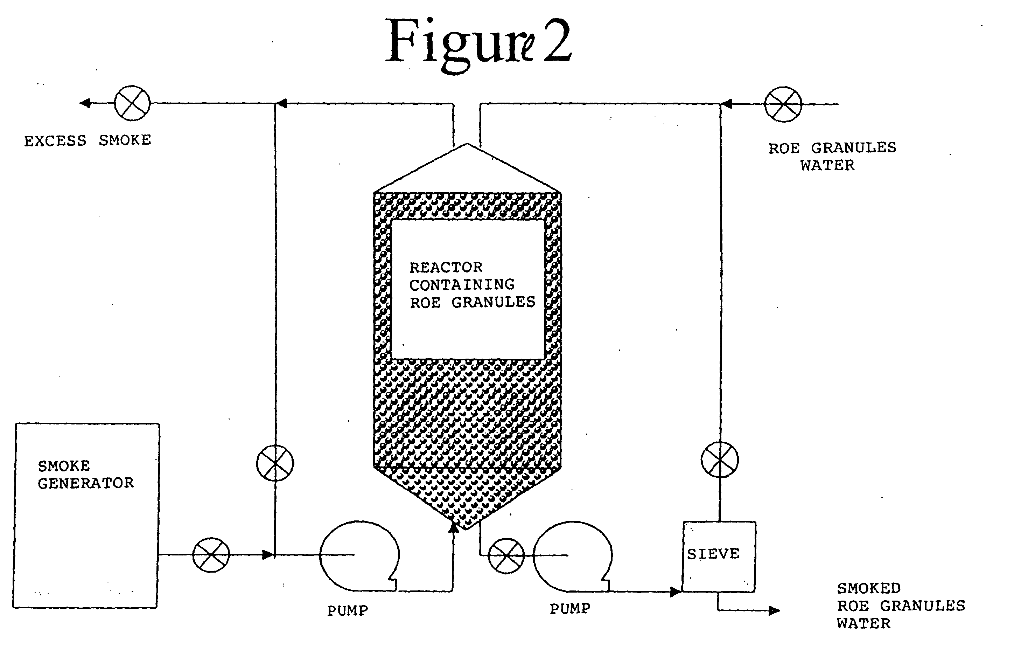

Figure 2 outlines a possible approach to continuous smoking of roe granules.

Smoke is fed to the reactor as outlined in Figure 1, used smoke may be recirculated and excess smoke is removed from the top, also as shown in Figure 1.

Roe granules and water are introduced from the top and may be removed continuously with the aid of a pump from the bottom of the reactor; this means that the roe is smoked in counter-current.

After the smoked roe granules, suspended in water as a support, are drawn off from the bottom of the reactor with the aid of a suitable pump, the finished product with some water may be removed for further processing after draining, whilst the water support with remaining smoke components may be recirculated to the desired extent.

Both continuous operation and operation in batches make possible the full utilization of raw materials and, at the sime time, are very economical in terms of water consumption since a high degree of recirculation is employed.

By means of the invention's wet-smoking concept, food products and particularly roe granules can be smoked without the formation of a dried crust on the product. The method enables an effective smoking of small particles such as, for example, peas, macaronies, pork bits and, as described above, roe granules.

In addition, vegetable oils and animal oils can be smoked effectively through atomization in a water phase together with the smoke.

One can further envisage, for example, that water particles containing odor and flavor particles, emulsified in an oil, may be treated with smoke in order to impart to them additional flavor or scent components.

Because smoking is a process limited by diffusion, the smoking of small components will be much more rapid than smoking of larger units. There have thus been made some calculations based on the smoking of roe which indicate that smoking of roe granules in their granular form is about 2000 times faster than smoking of an entire, intact roe sack.

The method of the present invention also enables a separation of the hydrophilic and hydrophobic components that impart flavor to foods through smoking, which makes it possible to control the smoke flavor far more effectively than with the conventional processes.

Thus it is possible to achieve new organoleptic experiences through the invention's wet-smoking process, for example by controlling the ratio between the hydrophobic and hydrophilic components, which can be accomplished by the proposed optional recirculation of the smoke after its passage through the food product.

## Claims

1. A method for smoking small particles or drops in dispersion, emulsion or suspension in a liquid support, **characterized in that** smoke from a suitable smoke generator, containing the desired quantities of hydrophilic and hydrophobic components, is passed through a stirred dispersion, emulsion or suspension of the particles, and that the used smoke, after passing through the dispersion, emulsion or suspension, is optionally recirculated for mixing with fresh smoke from the generator.

2. A method for smoking roe in the form of granules in a suspension in water, **characterized in that** smoke from a suitable smoke generator containing the desired quantities of hydrophilic and hydrophobic components is passed through a suspension of roe granules, and that the used smoke, after passing through the suspension, is optionally recirculated for mixing with fresh smoke from the generator.

## Patentansprüche

1. Verfahren zum Räuchern kleiner Teilchen oder Tropfen in einer Dispersion, Emulsion oder Suspension in einem flüssigen Träger, **dadurch gekennzeichnet, daß** Rauch aus einem geeigneten Raucherzeuger, der die gewünschten Mengen an hydrophilen oder hydrophoben Bestandteilen enthält, durch eine gerührte Dispersion, Emulsion oder Suspension der Teilchen geleitet wird, und dass der verwendete Rauch nach Durchleiten durch die Dispersion, Emulsion oder Suspension wahlweise zur Mischung mit frischem Rauch aus dem Erzeuger rezirkuliert wird.

2. Verfahren zum Räuchern von Rogen in Form von Körnchen in einer Suspension in Wasser, **dadurch gekennzeichnet, daß** Rauch aus einem geeigneten Raucherzeuger, der die gewünschten Mengen von hydrophilen und hydrophoben Bestandteilen enthält, durch eine Suspension von Rogenkörnern geleitet wird und dass der verwendete Rauch nach Durchgang durch die Suspension wahlweise zur Mischung mit frischem Rauch aus dem Erzeuger rezirkuliert wird.

## Revendications

1. Procédé pour fumer de petites particules ou des gouttelettes en dispersion, en émulsion ou en suspension dans un support liquide, **caractérisé en ce qu'**on fait passer de la fumée provenant d'un générateur de fumée approprié, qui contient les quantités désirées de composants hydrophiles et hydrophobes, à travers une dispersion, une émulsion ou une suspension agitée des particules, et **en ce qu'**on recycle, le cas échéant, la fumée utilisée, après son passage à travers la dispersion, l'émulsion ou la suspension, à des fins de mélange avec de la fumée fraîche provenant du générateur.

2. Procédé pour fumer de la laitance sous la forme de granules en suspension dans de l'eau, **caractérisé en ce qu'**on fait passer de la fumée provenant d'un générateur de fumée approprié, qui contient les quantités désirées de composants hydrophiles et hydrophobes, à travers une suspension de granules de laitance, et **en ce qu'**on recycle, le cas échéant, la fumée utilisée, après son passage à travers la suspension, à des fins de mélange avec de la fumée fraîche provenant du générateur.
